# EUROPÄISCHE PATENTANMELDUNG

(11) **EP 0 523 531 A2**
(43) Veröffentlichungstag der Anmeldung: **20.01.1993**
(21) Anmeldenummer: 92111595.2
(22) Anmeldetag: 08.07.1992
(51) Int. Cl.: B27G 19/10, B23D 59/00, B23Q 9/00

(54) **Handkreissäge zum Trennen von beschichteten Werkstücken aus Holz o. dgl.**

(30) Priorität: 13.07.1991 DE 4123315
(71) Anmelder: Karl M. Reich, Maschinenfabrik GmbH, 72607 Nürtingen (DE)
(72) Erfinder: Kuhn, Reiner, W-7440 Nürtingen (DE); Raichle, Dieter, W-7440 Nürtingen (DE); Weingart, Michael, W-7312 Kirchheim (DE)

(57) **Zusammenfassung**

Bei einer Handkreissäge (1) zum Trennen von beschichteten Werkstücken aus Holz oder dgl. mit einer entlang eines Führungslineals (3) führbaren Grundplatte (2) ist der Elektromotor (10) mit Sägeblatt (11) um eine Schwenkachse (9) schwenkbar und quer zur Sägerichtung verschiebbar gelagert. Damit lässt sich die Deckschicht des Werkstücks zunächst in einer Vorritzstellung des Sägeblatts (11) im Gleichlauf anritzen und anschließend lässt sich der gesamte Querschnitt des Werkstücks in einer dazu verschobenen Trennstellung im Gegenlauf vollständig durchtrennen.

## Beschreibung

Die Erfindung bezieht sich auf eine Handkreissäge zum Trennen von beschichteten Werkstücken aus Holz oder dgl. gemäß Oberbegriff von Anspruch 1.

Aus dem Hauptpatent (Patent-Anmeldung P 40 01 331.6) ist es bekannt, bei beschichteten Werkstücken aus Holz oder dgl. mit einer Deckschicht aus Kunststoff mit einer entlang eines Führungslineals führbaren Handkreissäge zunächst die Deckschicht im Gleichlauf in je einer quer zur Sägerichtung verschobenen Vorritzstellung des Sägeblatts und anschließend den gesamten Querschnitt des Werkstücks im Gegenlauf zwischen den Vorritzstellungen zu durchtrennen.

Dabei wird das Sägeblatt durch eine einfache Verschiebevorrichtung in die gewünschte Vorritzstellung gebracht, so daß nach Ausführung dieser Vorritzschnitte der endgültige Trennschnitt im Gegenlauf ohne Beschädigung der Deckschicht durchgeführt werden kann.

Aufgabe der vorliegenden Erfindung ist die Schaffung weiterer Verschiebevorrichtungen, mit denen es auf einfache Weise möglich ist, die Handkreissäge quer zur Sägerichtung zu verschieben.

Diese Aufgabe wird erfindungsgemäß gelöst durch die Merkmale im Kennzeichen der Ansprüche 1 und 4.

Bei einem ersten Ausführungsbeispiel verschiebt sich dabei durch Betätigen eines Verstellhebels die Achse des Motorträgers in achsialer Richtung und nimmt diesen mit. Durch die Wahl von verschiedenen Gewindesteigungen der Gewinde zwischen Lagerhülse und Motorträger-Achse kann dabei der Verstellweg variiert werden.

Bei einer zweiten Ausführungsform ist die Grundplatte der Handkreissäge mit einem getrennten Führungselement verbunden, das längs der Führungsrippe des Führungslineals verschiebbar gelagert ist.

Die Verbindung zwischen Grundplatte und Führungselement erfolgt durch Parallellogrammhebel, die durch ein einstellbares Verbindungsgestänge miteinander verbunden sind.

Zur Einstellung der Vorritztiefe dient ein Vorritzanschlag, der ein sicheres Arbeiten gewährleistet und der verhindert, daß beim Vorritzen im Gleichlauf mit voller Schnittiefe das Werkstück vom Sägeblatt berührt wird. Zum Einstellen der vollen Schnittiefe muß nämlich dieser Vorritzanschlag vom Bedienungsmann in seine Freigabestellung gebracht werden.

Ein weiterer Vorteil dieses Vorritzanschlages besteht darin, daß die Vorritztiefe bei einem Wechsel des Sägeblatts, bei nachgeschliffenen Sägeblättern oder bei verschieden dicken Deckschichten entsprechend eingestellt werden kann.

Soll das Werkstück nur besäumt werden, dann gehört der Säumling mit seiner Deckschicht zum Abfall, und es ist nur nötig, einen Vorritzgang durchzuführen. Dies ist der häufigste Anwendungsfall und der Arbeitsablauf wird damit erheblich verkürzt.

Bei der Ausführung von Gehrungsschnitten schwingt das Sägeblatt in Richtung Führungslineal, so daß es nötig ist, die Handkreissäge quer zu diesem Führungslineal zu verschieben. Die Querverschiebung der erfindungsgemäßen Handkreissäge erlaubt es somit, diese sowohl zum Vorritzen als auch zur Ausführung von Gehrungsschnitten zu verwenden.

Im folgenden sind Ausführungsbeispiele der Erfindung unter Bezugnahme auf die Zeichnungen näher beschrieben.

Es zeigen:
- Fig. 1: Handkreissäge mit Führungslineal, von oben
- Fig. 2: Schnitt nach Linie II - II in Fig. 1
- Fig. 3: Weiteres Ausführungsbeispiel einer Handkreissäge mit Führungslineal, von oben

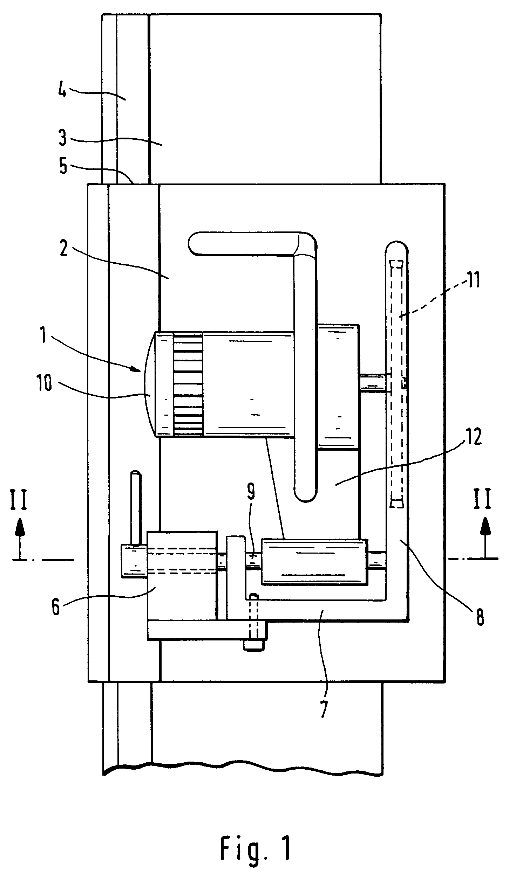

Wie Fig. 1 zeigt, ist eine Handkreissäge 1 mit ihrer Grundplatte 2 auf einem Führungslineal 3 in Sägerichtung verschiebbar gelagert. Zur Führung dient dabei eine Führungsrippe 4, die in eine Führungsrinne 5 der Grundplatte 2 eingreift.

Mit der Grundplatte 2 ist ein Lagerklotz 6 verbunden, an dem ein Lagergehäuse 7 und die damit verbundene Schutzhaube 8 der Handkreissäge befestigt ist.

Durch den Lagerklotz 6 erstreckt sich bis zur Schutzhaube 8 eine Schwenkachse 9, an der der Elektromotor 10 mit dem Sägeblatt 11 mit einem Motorträger 12 schwenkbar gelagert ist. Damit lässt sich die Schnittiefe des Sägeblatts 11 einstellen wobei sich die Lage der Schutzhaube 8 nicht verändert.

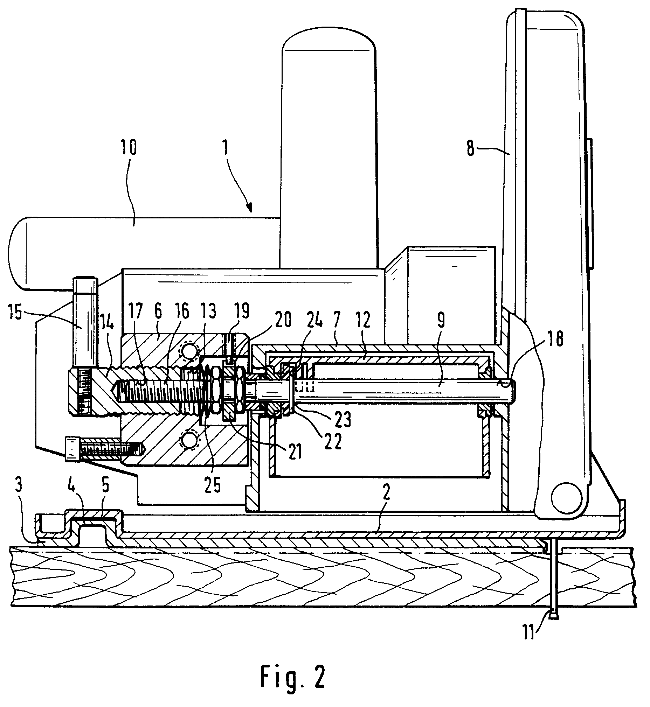

Wie insbesondere Fig. 2 zeigt, weist der Lagerklotz 6 ein Innengewinde 13 auf, in dem eine Lagerhülse 14 schraubbar gelagert ist. Zum Verdrehen dieser Lagerhülse dient ein Schwenkhebel 15, der je nach gewünschtem Verschiebeweg von Sägeblatt 11 in verschiedene Winkelstellungen bringbar ist.

Die Schwenkachse 9 ist mit ihrem einen Ende mit einer Gewindespindel 16 im Innengewinde 17 der Lagerhülse 14 und mit ihrem anderen Ende in einer Bohrung 18 von Lagergehäuse 7 in Achsrichtung verschiebbar gelagert.

Zur Verhinderung der Drehung von Schwenkachse 9 dient ein im Lagerklotz 6 befestigter Zapfen 19, der in eine Nut 20 einer mit der Schwenkachse 9 verbundenen Scheibe 21 eingreift.

Als Mitnehmer 22 für den Motorträger 12 dient ein in einer Nut 23 der Schwenkachse 9 eingerasteter Sicherungsring, der mit einer Anschlagfläche 24 von Motorträger 12 zusammenwirkt.

Zum Ausgleich des Gewindespiels zwischen Lagerhülse 14 Gewindespindel 16 und Lagerklotz 6 dienen Tellerfedern 25.

Durch die Kombination der Gewindepaarungen zwischen Lagerklotz 6, Lagerhülse 14 und Gewindespindel 16 in Form von zwei Rechtsgewinden lassen sich extrem kurze Verstellwege des sägeblatts 11 erzielen, wie sie zur Ausführung des erfindungsgemäßen Verfahrens notwendig sind.

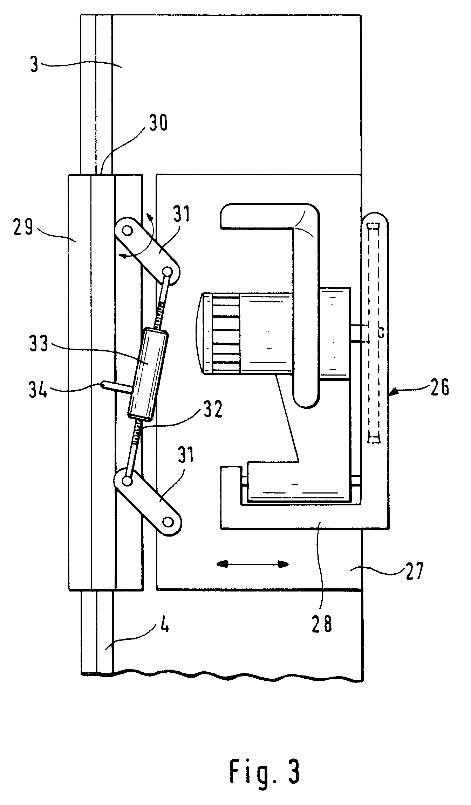

Bei einem zweiten Ausführungsbeispiel gemäß Fig. 3 ist die Handkreissäge 26 wieder an einem mit der Grundplatte 27 verbundenen Lagerklotz 28 schwenkbar, jedoch nicht achsial verschiebbar gelagert.

Zur achsialen Verschiebung von Handkreissäge 26 mit Grundplatte 27 dient vielmehr ein Führungselement 29, das getrennt von der Grundplatte 27 mit seiner Führungsrinne 30 die Führungsrippe 4 des Führungslineal 3 umfasst.

Führungselement 29 und Grundplatte 27 sind durch zwei parallele Laschen 31 miteinander verbunden, die jeweils schwenkbar an Führungselement 29 und Grundplatte 27 gelagert sind.

Die Laschen 31 sind jeweils an einem Ende durch ein Verbindungsgestänge 32 miteinander verbunden, wobei im Verbindungsgestänge 32 ein Verstellorgan 33 vorgesehen ist. Es handelt sich dabei um ein Spannschloß, in das die gegenüberliegenden Teile des Verbindungsgestänges 32 schraubbar eingreifen. Das Verstellorgan 33 ist durch einen Betätigungshebel 34 verdrehbar, wobei sich die Länge von Verbindungsgestänge 32 ändert und dabei die Grundplatte 27 zusammen mit der Handkreissäge 26 eine Querbewegung quer zur Sägerichtung ausführt.

## Patentansprüche

1. Handkreissäge zum Trennen von beschichteten Werkstücken aus Holz oder dgl. mit einer entlang eines Führungslineals führbaren Handkreissäge mit einem von einem Elektromotor antreibbaren Sägeblatt, der an einer Grundplatte höhenverstellbar und quer zur Sägerichtung verschiebbar gelagert ist zur Durchführung des Verfahrens gemäß Hauptpatent (Patentanmeldung P 40 01 331.6), **dadurch gekennzeichnet**, daß der Elektromotor (10) mit dem Sägeblatt (11) koachsial zu der an der Grundplatte (2) angeordneten Schwenkachse (9) quer zur Sägerichtung verschiebbar gelagert ist.

2. Handkreissäge nach Anspruch 1, **dadurch gekennzeichnet**, daß der Elektromotor (10) mit der quer zur Sägerichtung verschiebbaren Schwenkachse (9) durch einen Mitnehmer (22) gekuppelt ist.

3. Handkreissäge nach Anspruch 2, **dadurch gekennzeichnet**, daß mit der Grundplatte ein Lagerklotz (6) verbunden ist, in dem eine Lagerhülse (14) schraubbar gelagert ist, in deren Innengewinde (13) die Gewindespindel (16) der Schwenkachse (9) eingreift.

4. Handkreissäge zum Trennen von beschichteten Werkstücken aus Holz oder dgl. mit einer entlang eines Führungslineals führbaren Handkreissäge mit einem von einem Elektromotor antreibbaren Sägeblatt, der an einer Grundplatte höhenverstellbar und quer zur Sägerichtung verschiebbar gelagert ist zur Durchführung des Verfahrens gemäß Hauptpatent (Patentanmeldung P 40 01 331.6), **dadurch gekennzeichnet**, daß ein entlang des Führungslineals (3) verschiebbares Führungselement (29) mit einer Führungsrinne (30) vorgesehen ist, an dem die Grundplatte (27) quer zur Sägerichtung verschiebbar gelagert ist.

5. Handkreissäge nach Anspruch 4, **dadurch gekennzeichnet**, daß die Grundplatte (27) mit mindestens zwei parallelen, schwenkbaren Laschen (31) am Führungselement (29) gelagert ist.

6. Handkreissäge nach Anspruch 5, **dadurch gekennzeichnet**, daß die Laschen (31) durch ein Verbindungsgestänge (32) miteinander verbunden sind, dessen Enden durch ein Verstellorgan (33) gegeneinander einstellbar sind.
